(19) Europäisches Patentamt / European Patent Office / Office européen des brevets

(11) **EP 4 749 335 A1**

(12) **EUROPEAN PATENT APPLICATION**
published in accordance with Art. 153(4) EPC

(43) Date of publication:
**27.05.2026 Bulletin 2026/22**

(21) Application number: **24843134.8**

(22) Date of filing: **16.07.2024**

(51) International Patent Classification (IPC):
$G02B\ 1/00^{(2006.01)}$      $B32B\ 17/10^{(2006.01)}$
$G02B\ 1/04^{(2006.01)}$      $G02B\ 27/02^{(2006.01)}$

(52) Cooperative Patent Classification (CPC):
**B32B 17/10; G02B 1/00; G02B 1/04; G02B 27/02**

(86) International application number:
**PCT/JP2024/025512**

(87) International publication number:
**WO 2025/018344 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.07.2023 JP 2023118126**

(71) Applicant: **Mitsui Chemicals, Inc.
Tokyo 104-0028 (JP)**

(72) Inventors:
• **AONO, Akifumi
Nagoya-shi, Aichi 457-8522 (JP)**
• **MURAMATSU, Akihiro
Nagoya-shi, Aichi 457-8522 (JP)**

(74) Representative: **Hoffmann Eitle
Patent- und Rechtsanwälte PartmbB
Arabellastraße 30
81925 München (DE)**

(54) **OPTICAL LAMINATE, METHOD FOR MANUFACTURING OPTICAL LAMINATE, AND OPTICAL INFORMATION TRANSMISSION DEVICE**

(57)      An optical laminate (10) including an optical substrate (1), a (thio)urethane-based optical resin layer (2) on at least one surface of the optical substrate (1), and an adhesive layer (3) between the optical substrate (1) and the (thio)urethane-based optical resin layer (2), in which a glass transition temperature of the adhesive layer (3) is 70°C or lower.

[Fig.1]

**Description**

TECHNICAL FIELD

The present invention relates to an optical laminate, a method for manufacturing an optical laminate, and an optical information transmission device.

BACKGROUND ART

In recent years, in the field of optical devices, the demand for resin materials has increased due to reasons such as weight reduction and improvement of impact resistance. For example, in an optical device worn on a human body, such as a wearable device, the use of a resin material is required.

Patent Document 1 discloses an optical member including an organic polymer, having an area of 1 mm$^2$ or more, and having a surface A in which a flatness is 80 $\mu$m or less when a flatness of a region having an area of 1 mm$^2$ is measured with a noncontact optical flatness meter, for the purpose of providing an optical member that is lightweight and capable of transmitting optical information with high accuracy.

RELATED DOCUMENT

PATENT DOCUMENT

Patent Document 1: International Publication No. WO 2020/170801

SUMMARY OF THE INVENTION

TECHNICAL PROBLEM

The present invention provides an optical laminate of an optical substrate and a (thio)urethane-based optical resin layer, in which warping can be suppressed.

SOLUTION TO PROBLEM

That is, according to the present invention, an optical laminate, a method for manufacturing an optical laminate, and an optical information transmission device described below are provided.

1. An optical laminate including:

an optical substrate;
a (thio)urethane-based optical resin layer on at least one surface of the optical substrate; and
an adhesive layer between the optical substrate and the (thio)urethane-based optical resin layer,
wherein a glass transition temperature of the adhesive layer is 70°C or lower.

2. The optical laminate according to 1., in which a loss elastic modulus of the adhesive layer, which is measured under conditions of a temperature of 25°C and a measurement frequency of 1 Hz in a tensile mode, is 0.001 GPa or more and 1.5 GPa or less.

3. The optical laminate according to 1. or 2., in which a thickness of the adhesive layer is 0.5 $\mu$m or more and 1000 $\mu$m or less.

4. The optical laminate according to any one of 1. to 3., in which a curing shrinkage rate obtained by Expression (1) from a density $D_0$ of the adhesive layer before curing and a density $D_1$ of the adhesive layer after curing, which are measured according to JIS K-5600-2-4:2014, is 10% or less.

$$\text{Curing shrinkage rate (\%)} = (D_1 - D_0)/D_0 \quad (1)$$

5. The optical laminate according to any one of 1. to 4., in which a refractive index of the adhesive layer at a temperature of 25°C and a wavelength of 587.6 nm according to JIS K-0062:1992 is 1.47 or more.

6. The optical laminate according to any one of 1. to 5., in which the adhesive layer includes one or two or more selected from the group consisting of a (meth)acrylic-based resin and an epoxy-based resin.

7. The optical laminate according to any one of 1. to 6., in which the adhesive layer is formed of a cured product of an adhesive resin composition, and the adhesive resin composition is a photocurable resin composition or a thermosetting resin composition.

8. The optical laminate according to any one of 1. to 7., in which a thickness of the (thio)urethane-based optical resin layer is 2.0 mm or less.

9. The optical laminate according to any one of 1. to 8., in which a refractive index of the (thio)urethane-based optical resin layer at a temperature of 25°C and a wavelength of 587.6 nm according to JIS K-0062:1992 is 1.47 or more.

10. The optical laminate according to any one of 1. to 9., in which the optical substrate includes one or two or more selected from the group consisting of a glass substrate and an optical crystal substrate.

11. The optical laminate according to any one of 1. to 10., in which a refractive index of the optical substrate at a temperature of 25°C and a wavelength of 587.6 nm according to JIS K-0062:1992 is 1.47 or more.

12. The optical laminate according to any one of 1. to 11., further including: a transparent inorganic substance layer between the optical substrate and the adhesive layer.

13. The optical laminate according to any one of 1. to 12., further including: a coupling agent layer between the optical substrate and the adhesive layer.

14. The optical laminate according to any one of 1. to 13., in which a warpage $F_A$ of a surface A on the (thio)urethane-based optical resin layer side in the optical laminate is 350 $\mu$m or less.

15. The optical laminate according to any one of 1. to 14., in which the (thio)urethane-based optical resin layer is not peeled off from the optical substrate when the optical laminate is placed in an environment of a temperature of 60°C and a humidity of 90% for 360 hours.

16. The optical laminate according to any one of 1. to 15., in which a refractive index of the optical laminate at a temperature of 25°C and a wavelength of 587.6 nm according to JIS K-0062:1992 is 1.47 or more.

17. The optical laminate according to any one of 1. to 16., in which the optical laminate is usable for a wearable device.

18. A method for manufacturing an optical laminate, including:

a step (A) of preparing a laminate including an optical substrate, a (thio)urethane-based optical resin layer on at least one surface of the optical substrate, and an uncured or semi-cured adhesive layer between the optical substrate and the (thio)urethane-based optical resin layer; and

a step (B) of curing the uncured or semi-cured adhesive layer to obtain an optical laminate.

19. The method for manufacturing an optical laminate according to 18., further including: a step (C) of placing the laminate in a reduced pressure environment before the step (B).

20. An optical information transmission device including:

a light irradiation unit; and

the optical laminate according to any one of 1. to 17.

ADVANTAGEOUS EFFECTS OF INVENTION

According to the present invention, it is possible to provide an optical laminate including an optical substrate and a (thio)urethane-based optical resin layer, in which warping can be suppressed.

BRIEF DESCRIPTION OF THE DRAWINGS

[FIG. 1] A cross-sectional view schematically showing an example of an optical laminate of the present embodiment.
[FIG. 2] A cross-sectional view schematically showing an example of the optical information transmission device according to the present embodiment.

DESCRIPTION OF EMBODIMENTS

Hereinafter, the present invention will be described based on the embodiments.

In a case where a numerical value range is described in a stepwise manner, the upper limit and the lower limit of each numerical value range can be optionally combined.

[Optical laminate]

Hereinafter, the optical laminate according to the present embodiment will be described in detail.

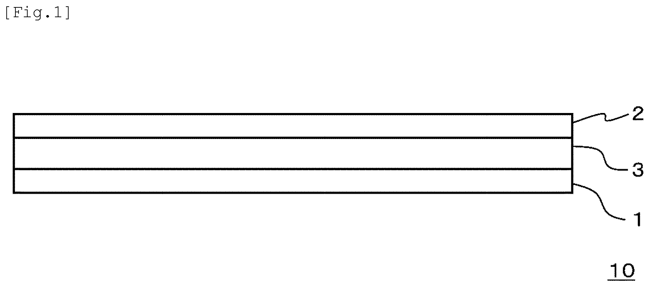

The optical laminate according to the present embodiment will be described with reference to FIG. 1. An optical laminate 10 of the present embodiment includes an optical substrate 1, a (thio)urethane-based optical resin layer 2 on at least one surface of the optical substrate 1, and an adhesive layer 3 between the optical substrate 1 and the (thio)urethane-based optical resin layer 2, in which a glass transition temperature of the adhesive layer 3 is 70°C or lower.

The mechanism by which the above-described problems are solved by the optical laminate of the present embodiment is not clear, but it is presumed that the above-described problems are solved by the following mechanism.

First, as a premise, due to a difference in linear expansion coefficient between the optical substrate and the (thio) urethane-based optical resin layer, the optical laminate is likely to be distorted, and thus warping is likely to occur.

In the optical laminate of the present embodiment, it is considered that in a case where the optical laminate is distorted, the adhesive layer relaxes the stress, and thus the occurrence of warping is suppressed.

<Adhesive layer>

Hereinafter, the adhesive layer of the optical laminate according to the present embodiment will be described.

From the viewpoint of further suppressing warping of the optical laminate and viewpoint of suppressing peeling of the optical laminate, the glass transition temperature of the adhesive layer is preferably 65°C or lower, more preferably 60°C or lower, still more preferably 55°C or lower, still more preferably 50°C or lower, and still more preferably 45°C or lower. From the viewpoint of further suppressing warping of the optical laminate and viewpoint of suppressing peeling of the optical laminate in a high temperature environment and/or a high humidity environment, the glass transition temperature of the adhesive layer is preferably -20°C or higher, more preferably - 10°C or higher, still more preferably 0°C or higher, still more preferably 10°C or higher, still more preferably 15°C or higher, and still more preferably 20°C or higher.

From the viewpoint of further suppressing the warping of the optical laminate and the viewpoint of suppressing the peeling of the optical laminate, the glass transition temperature of the adhesive layer is preferably -20°C or higher and 70°C or lower, more preferably -10°C or higher and 65°C or lower, still more preferably 0°C or higher and 60°C or lower, even still more preferably 10°C or higher and 55°C or lower, even still more preferably 15°C or higher and 50°C or lower, and even still more preferably 20°C or higher and 45°C or lower.

The glass transition temperature of the adhesive layer can be measured by dynamic mechanical analysis (DMA). Specifically, the measurement can be performed under the following

<Measurement conditions>.

<Measurement Conditions>

Device: dynamic viscoelasticity measuring device
Sample shape: width 10 mm $\times$ thickness 0.1 mm $\times$ length 20 mm
temperature rising rate: 5 °C/min
Measurement mode: tension

The glass transition temperature of the adhesive layer can be adjusted by adjusting the composition of the adhesive layer. For example, the ratio of the high-molecular-weight component to the low-molecular-weight component (for example, an additive or a curing agent) in the adhesive layer may be adjusted, or the crosslinking density of the adhesive layer may be adjusted.

From the viewpoint of further suppressing warping of the optical laminate and viewpoint of suppressing peeling of the optical laminate, a loss elastic modulus of the adhesive layer measured under a condition of a temperature of 25°C and a measurement frequency of 1 Hz in a tensile mode is preferably 0.001 GPa or more, more preferably 0.01 GPa or more, and still more preferably 0.03 GPa or more, and from the viewpoint of further suppressing warping of the optical laminate and viewpoint of suppressing peeling of the optical laminate, the loss elastic modulus of the adhesive layer is preferably 1.5 GPa or less, more preferably 1.3 GPa or less, still more preferably 1.1 GPa or less, even still more preferably 0.9 GPa or less, even still more preferably 0.7 GPa or less, even still more preferably 0.5 GPa or less, and even still more preferably 0.3 GPa or less.

From the viewpoint of further suppressing the warping of the optical laminate and the viewpoint of suppressing the peeling of the optical laminate, the loss elastic modulus of the adhesive layer, which is measured under the conditions of a temperature of 25°C and a measurement frequency of 1 Hz in a tensile mode, is preferably 0.001 GPa or more and 1.5 GPa or less, more preferably 0.01 GPa or more and 1.3 GPa or less, still more preferably 0.03 GPa or more and 1.1 GPa or less, even still more preferably 0.03 GPa or more and 0.9 GPa or less, even still more preferably 0.03 GPa or more and 0.7 GPa or less, even still more preferably 0.03 GPa or more and 0.5 GPa or less, and even still more preferably 0.03 GPa or more and 0.3 GPa or less.

The loss elastic modulus of the adhesive layer can be measured by dynamic mechanical analysis (DMA). Specifically, the measurement can be performed under the following

<Measurement conditions>.

<Measurement Conditions>

Device: dynamic viscoelasticity measuring device
Sample shape: width 10 mm × thickness 0.1 mm × length 20 mm
Temperature: 25°C
Measurement mode: tension

The loss elastic modulus of the adhesive layer can be adjusted by adjusting the composition of the adhesive layer. For example, the ratio of the high-molecular-weight component to the low-molecular-weight component in the adhesive layer may be adjusted, or the crosslinking density of the adhesive layer may be adjusted.

From the viewpoint of further suppressing warping of the optical laminate and viewpoint of suppressing peeling of the optical laminate, the thickness of the adhesive layer is preferably 0.5 $\mu$m or more, more preferably 1 $\mu$m or more, still more preferably 5 $\mu$m or more, even more preferably 10 $\mu$m or more, and yet even more preferably 15 $\mu$m or more, and from the viewpoint of reducing the thickness of the entire optical laminate, the thickness of the adhesive layer is preferably 1000 $\mu$m or less, more preferably 500 $\mu$m or less, still more preferably 200 $\mu$m or less, even more preferably 100 $\mu$m or less, even still more preferably 80 $\mu$m or less, and even further preferably 60 $\mu$m or less.

From the viewpoint of further suppressing warping of the optical laminate and viewpoint of suppressing peeling of the optical laminate while reducing a thickness of the entire optical laminate, a thickness of the adhesive layer is preferably 0.5 $\mu$m or more and 1000 $\mu$m or less, more preferably 1 $\mu$m or more and 500 $\mu$m or less, still more preferably 5 $\mu$m or more and 200 $\mu$m or less, even still more preferably 10 $\mu$m or more and 100 $\mu$m or less, even still more preferably 15 $\mu$m or more and 80 $\mu$m or less, and even still more preferably 15 $\mu$m or more and 60 $\mu$m or less.

From the viewpoint of further suppressing warping of the optical laminate and from the viewpoint of suppressing peeling of the optical laminate, the curing shrinkage rate obtained by Expression (1) from the density $D_0$ of the adhesive layer before curing and the density $D_1$ of the adhesive layer after curing, which are measured according to JIS K-5600-2-4:2014, is preferably 10% or less, more preferably 9% or less, and still more preferably 8% or less, and may be, for example, 0.01% or more, 0.1% or more, or 1% or more.

$$\text{Curing shrinkage rate (\%) } = \text{ } (D_1 - D_0)/D_0 \text{ } (1)$$

The curing shrinkage rate of the adhesive layer can be adjusted by adjusting the composition of the adhesive layer. For example, the ratio of the high-molecular-weight component to the low-molecular-weight component in the adhesive layer may be adjusted, or the crosslinking density of the adhesive layer may be adjusted.

From the viewpoint of improving the optical characteristics of the optical laminate, the refractive index of the adhesive layer at a temperature of 25°C and a wavelength of 587.6 nm according to JIS K-0062:1992 is preferably 1.47 or more, more preferably 1.49 or more, still more preferably 1.51 or more, and even still more preferably 1.53 or more, and may be, for example, 1.90 or less, 1.80 or less, or 1.70 or less.

From the viewpoint of further suppressing warping of the optical laminate and viewpoint of suppressing peeling of the optical laminate, the linear expansion coefficient of the adhesive layer measured under the following <Measurement conditions> is preferably $200 \times 10^{-6}$/°C or less and more preferably $150 \times 10^{-6}$/°C or less. From the viewpoint of further suppressing warping of the optical laminate and viewpoint of suppressing peeling of the optical laminate, the linear expansion coefficient of the adhesive layer is preferably $2 \times 10^{-6}$/°C or more, more preferably $4 \times 10^{-6}$/°C or more, even more preferably $6 \times 10^{-6}$/°C or more, and still more preferably $8 \times 10^{-6}$/°C or more, since it is preferable that a difference in linear expansion coefficient between the adhesive layer and the optical substrate is small.

<Measurement Conditions>

Measurement mode: TMA compression mode

Test load: 50 mN
temperature rising rate: 5 °C/min
Test temperature range: 0°C to 200°C
Measurement atmosphere: nitrogen (100 ml/min)

The adhesive layer preferably contains one or two or more selected from the group consisting of a (meth)acrylic-based resin and an epoxy-based resin, and more preferably contains a (meth)acrylic-based resin.

The adhesive layer may further contain a known adhesive. Examples of the known adhesive include laminated adhesives formed of an organic titanium resin, a polyethylenimine resin, a urethane resin, a polyester resin, an oxazoline group-containing resin, a modified silicone resin, an alkyl titanate, a polyester polybutadiene, and the like, or a one-component type or two-component type polyols and polyvalent isocyanates, aqueous urethane, ionomers, and the like. Alternatively, an aqueous adhesive mainly formed of an acrylic resin, a vinyl acetate resin, a urethane resin, a polyester resin, or the like may be used. In addition, other additives such as a curing agent and a silane coupling agent may be added to the adhesive depending on the application of the gas barrier laminate.

The adhesive layer is preferably formed of a cured product of an adhesive resin composition, and the adhesive resin composition is a photocurable resin composition or a thermosetting resin composition, and more preferably formed of a cured product of an adhesive resin composition, and the adhesive resin composition is a photocurable resin composition.

The viscosity of the adhesive resin composition, which is measured under a condition of a temperature of 25°C using a cone plate type viscometer (manufactured by Brookfield, model name: DV2T) and further using CPA-40G (angle: 0.8°, radius: 24 mm, sample amount: 0.5 mL, shear rate: 7.5 N/s) as a cone spindle, is preferably 50 mPa·s or more, more preferably 100 mPa·s or more, still more preferably 200 mPa·s or more, even still more preferably 300 mPa·s or more, and even further still more preferably 400 mPa·s or more, and is preferably 5000 mPa·s or less, more preferably 2000 mPa·s or less, still more preferably 1000 mPa·s or less, and even still more preferably 800 mPa·s or less.

<(Thio)urethane-based optical resin layer>

Hereinafter, the (thio)urethane-based optical resin layer according to the present embodiment will be described. the (thio)urethane-based optical resin layer contains a (thio)urethane resin. The (thio)urethane resin can be obtained from an iso(thio)cyanate compound and a bifunctional or higher functional active hydrogen compound. Examples of the bifunctional or higher functional active hydrogen compound include a polyol compound and a polythiol compound.

Examples of the iso(thio)cyanate compound include hexamethylene diisocyanate, pentamethylene diisocyanate, xylylene diisocyanate, isophorone diisocyanate, bis(isocyanatomethyl)cyclohexane, bis(isocyanatocyclohexyl) methane, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and 4,4'-diphenylmethane diisocyanate.

Specific examples of the polythiol compound include pentaerythritol tetrakis(2-mercaptoacetate), pentaerythritol tetrakis(3-mercaptopropionate), bis(2-mercaptoethyl)sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, ethylene glycol bis(3-mercaptopropionate), and the like.

Examples of the polyol compound include linear or branched aliphatic alcohols such as ethylene glycol, diethylene glycol, triethylene glycol, propylene glycol, dipropylene glycol, tripropylene glycol, 1,3-propanediol, 2,2-dimethyl-1,3-propanediol, 2,2-diethyl-1,3-propanediol, 1,2-butanediol, 1,3-butanediol, 1,4-butanediol, 3-methyl-1,3-butanediol, 1,2-pentanediol, 1,3-pentanediol, 1,5-pentanediol, 2,4-pentanediol, 2-methyl-2,4-pentanediol, 3-methyl-1,5-pentanediol, 1,6-hexanediol, 2,5-hexanediol, glycerol, diglycerol, polyglycerol, trimethylolpropane, pentaerythritol, and di(trimethylolpropane); and alicyclic alcohols such as 1,2-cyclopentanediol, 1,3-cyclopentanediol, 3-methyl-1,2-cyclopentanediol, 1,2-cyclohexanediol, 1,3-cyclohexanediol, 1,4-cyclohexanediol, 4,4'-bicyclohexanol, and 1,4-cyclohexanedimethanol.

The thickness of the (thio)urethane-based optical resin layer is preferably 2.0 mm or less, more preferably 1.5 mm or less, still more preferably 1.0 mm or less, even still more preferably 0.8 mm or less, even still more preferably 0.6 mm or less, and even still more preferably 0.4 mm or less.

From the viewpoint of improving the optical characteristics of the optical laminate, the refractive index of the (thio) urethane-based optical resin layer at a temperature of 25°C and a wavelength of 587.6 nm according to JIS K-0062:1992 is preferably 1.47 or more, more preferably 1.49 or more, still more preferably 1.51 or more, and even still more preferably 1.53 or more, and it may be, for example, 1.90 or less, 1.80 or less, or 1.70 or less.

From the viewpoint of further suppressing warping of the optical laminate and viewpoint of suppressing peeling of the optical laminate, the linear expansion coefficient of the (thio)urethane-based optical resin layer, which is measured under the following <Measurement conditions>, is preferably $100 \times 10^{-6}/°C$ or less and more preferably $80 \times 10^{-6}/°C$ or

less. From the viewpoint of further suppressing warping of the optical laminate and viewpoint of suppressing peeling of the optical laminate, the linear expansion coefficient of the (thio)urethane-based optical resin layer is preferably $2 \times 10^{-6}/°C$ or more, more preferably $4 \times 10^{-6}/°C$ or more, still more preferably $6 \times 10^{-6}/°C$ or more, and even still more preferably $8 \times 10^{-6}/°C$ or more, since it is preferable that a difference in linear expansion coefficient between the (thio)urethane-based optical resin layer and the optical substrate is small.

<Measurement Conditions>

    Measurement mode: TMA compression mode
    Test load: 50 mN
    temperature rising rate: 5 °C/min
    Test temperature range: 23°C to 200°C
    Measurement atmosphere: nitrogen (100 ml/min)

<Optical Substrate>

Hereinafter, the optical substrate of the optical laminate according to the present embodiment will be described.
The optical substrate preferably includes one or two or more selected from the group consisting of a glass substrate and an optical crystal substrate. Examples of the optical crystal substrate include a SiC substrate, a $LiNb_2O_3$ substrate (LN substrate), an $Al_2O_3$ substrate, a sapphire substrate, a crystal substrate, and a quartz substrate.
From the viewpoint of improving the optical characteristics of the optical laminate, the refractive index of the optical substrate at a temperature of 25°C and a wavelength of 587.6 nm according to JIS K-0062:1992 is preferably 1.47 or more, more preferably 1.49 or more, still more preferably 1.51 or more, and even still more preferably 1.53 or more, and may be, for example, 1.90 or less, 1.80 or less, or 1.70 or less.
From the viewpoint of further suppressing warping of the optical laminate and viewpoint of suppressing peeling of the optical laminate, the linear expansion coefficient of the optical substrate measured under the following <Measurement conditions> is preferably $0.1 \times 10^{-6}/°C$ or more, more preferably $0.5 \times 10^{-6}/°C$ or more, still more preferably $2 \times 10^{-6}/°C$ or more, and even still more preferably $4 \times 10^{-6}/°C$ or more, and may be, for example, $40 \times 10^{-6}/°C$ or less or $20 \times 10^{-6}/°C$ or less, since a difference in linear expansion coefficient between the optical substrate and the adhesive layer or the (thio)urethane-based optical resin layer is preferably small.

<Measurement Conditions>

    Measurement mode: TMA compression mode
    Test load: 50 mN
    temperature rising rate: 5 °C/min
    Test temperature range: 23°C to 200°C
    Measurement atmosphere: nitrogen (100 ml/min)

<Other layer configurations>

The optical laminate of the present embodiment may include a configuration other than the adhesive layer, the (thio)urethane-based optical resin layer, and the optical substrate.
From the viewpoint of suppressing peeling of the optical laminate, the optical laminate according to the present embodiment preferably further includes a transparent inorganic substance layer between the optical substrate and the adhesive layer.
The means for forming the transparent inorganic substance layer is not particularly limited, and for example, the transparent inorganic substance layer can be formed by sputtering the surface of the optical substrate. Specifically, first, the optical substrate is placed in a vacuum container, a gas such as argon gas is introduced, and then a negative voltage is applied to the surface of the optical substrate to generate glow discharge and ionize gas atoms. As a result, the ionized gas atoms collide with the surface of the optical substrate, and particles (atoms and molecules) on the surface of the optical substrate are repelled, and are attached to and deposited on the surface of the optical substrate, thereby forming a transparent inorganic substance layer.
The thickness of the transparent inorganic substance layer is not particularly limited, and from the viewpoint of further suppressing warping of the optical laminate and from the viewpoint of suppressing peeling of the optical laminate, is preferably 5 nm or more, more preferably 10 nm or more, still more preferably 20 nm or more, and even more preferably 50 nm or more, and is, for example, 100 nm or less.

From the viewpoint of suppressing peeling of the optical laminate, the optical laminate according to the present embodiment preferably further includes a coupling agent layer between the optical substrate and the adhesive layer.

The coupling agent contained in the coupling agent layer is not particularly limited, and examples thereof include a silane coupling agent. Examples of the silane coupling agent include vinyl group-containing silane coupling agents such as vinyltrimethoxysilane and vinyltriethoxysilane, epoxy group-containing silane coupling agents such as 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltriethoxysilane, and (meth)acryloyl group-containing silane coupling agents such as 3-methacryloxypropylmethyldimethoxysilane, 3-methacryloxypropyltrimethoxysilane, 3-methacryloxypropylmethyldiethoxysilane, 3-methacryloxypropyltriethoxysilane, and 3-acryloxypropyltrimethoxysilane.

The thickness of the coupling agent layer is not particularly limited, and from the viewpoint of further suppressing warping of the optical laminate and viewpoint of suppressing peeling of the optical laminate, is preferably 1 nm or more, more preferably 2 nm or more, still more preferably 5 nm or more, and even more preferably 10 nm or more, and may be, for example, 50 nm or less.

The optical laminate of the present embodiment may include, for example, a layer configuration of an antistatic layer that prevents the optical laminate from being charged, a hard coat layer that prevents the optical laminate from being scratched, a moisture barrier layer that blocks moisture from entering the optical laminate, an antireflection film that reduces surface reflection of the optical laminate, and the like, in addition to the above-described configurations.

<Physical properties and applications of optical laminate>

Hereinafter, the physical properties and applications of the optical laminate of the present embodiment will be described.

The warpage $F_A$ of the surface A on the (thio)urethane-based optical resin layer side in the optical laminate of the present embodiment is preferably 350 $\mu$m or less, more preferably 300 $\mu$m or less, still more preferably 250 $\mu$m or less, even still more preferably 200 $\mu$m or less, even still more preferably 150 $\mu$m or less, even still more preferably 100 $\mu$m or less, and even still more preferably 50 $\mu$m or less, and may be, for example, 0.01 $\mu$m or more.

The warpage $F_A$ can be measured by an ultra-high-precision three-dimensional measuring machine. Specifically, the measurement can be performed under the following conditions.

Device: UA3P (manufactured by Panasonic Production Engineering Co., Ltd.)
Measurement region: circular region of $\pm$ 30 mm from the center of the optical laminate in each of the X and Y directions

When the optical laminate according to the present embodiment is placed in an environment of a temperature of 60°C and a humidity of 90% for 360 hours, the (thio)urethane-based optical resin layer is preferably not peeled off from the optical substrate.

From the viewpoint of improving the optical characteristics of the optical laminate, the refractive index of the optical laminate at a temperature of 25°C and a wavelength of 587.6 nm according to JIS K-0062:1992 is preferably 1.47 or more, more preferably 1.49 or more, still more preferably 1.51 or more, and even still more preferably 1.53 or more, and may be, for example, 1.90 or less, 1.80 or less, or 1.70 or less.

The use of the optical laminate of the present embodiment is not particularly limited, and is usable for a wearable device, and more specifically, it is usable for a wearable display that displays virtual reality (VR), augmented reality (AR), or the like.

[Method for manufacturing optical laminate]

Hereinafter, a method for manufacturing an optical laminate of the present embodiment will be described.

The method for manufacturing an optical laminate according to the present embodiment includes a step (A) of preparing a laminate including an optical substrate, a (thio)urethane-based optical resin layer on at least one surface of the optical substrate, and an uncured or semi-cured adhesive layer between the optical substrate and the (thio)urethane-based optical resin layer, and a step (B) of curing the uncured or semi-cured adhesive layer to obtain the optical laminate.

The method for manufacturing an optical laminate according to the present embodiment may further include a step (C) of placing the laminate in a reduced pressure environment before the step (B). As a result, it is possible to prevent misalignment of the respective members during lamination. In addition, this makes it possible to prevent air bubbles from being generated between the layers.

The method for manufacturing an optical laminate according to the present embodiment may further include a step of sputtering a surface of the optical substrate. By sputtering the surface of the optical substrate, a transparent inorganic substance layer can be formed on the surface of the optical substrate.

The method for manufacturing an optical laminate according to the present embodiment may further include a step of subjecting a surface of the optical substrate to surface treatment plasma ashing. By plasma ashing the surface of the optical substrate, the surface of the optical substrate can be activated.

The method for manufacturing an optical laminate according to the present embodiment may further include a step of applying a coupling agent to a surface of the optical substrate. By applying a coupling agent to the surface of the optical substrate, a coupling agent layer can be formed on the surface of the optical substrate.

In the method for manufacturing an optical laminate according to the present embodiment, from the viewpoint of further suppressing warping of the optical laminate and the viewpoint of suppressing peeling of the optical laminate, it is preferable to apply a coupling agent to the surface of the optical substrate on which sputtering is performed.

[Optical Information Transmission Device]

Hereinafter, an optical information transmission device according to the present embodiment will be described.

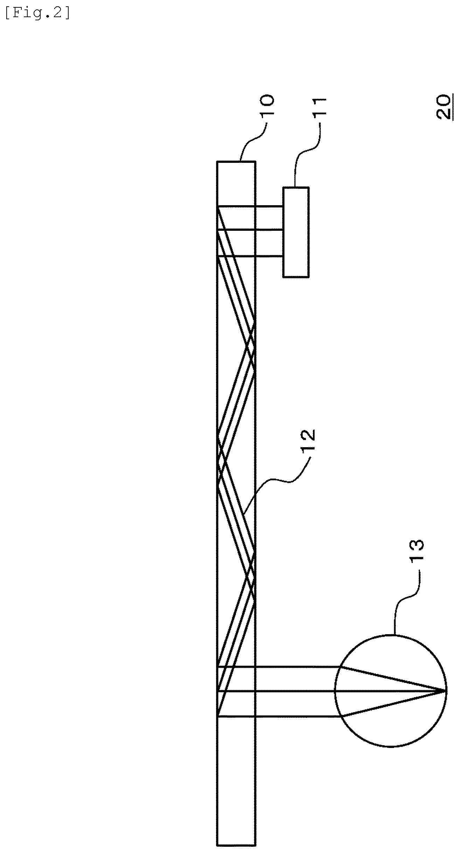

The optical information transmission device according to the present embodiment will be described with reference to FIG. 2. The optical information transmission device 20 according to the present embodiment includes a light irradiation unit 11 and the optical laminate 10.

The light 12 emitted from the light irradiation unit 11 is reflected by the optical laminate 10, and the reflected light is emitted to the eyes 13 of the user. As a result, the light emitted from the light irradiation unit 11 is recognized by the user wearing the optical information transmission device 10.

Although the embodiments of the present invention have been described above, these are examples of the present invention, and various configurations other than the above can be adopted.

In addition, the present invention is not limited to the above-described embodiments, and modifications, improvements, and the like within a range in which the object of the present invention can be achieved are included in the present invention.

[Examples]

Hereinafter, the present invention will be described in more detail with reference to Examples, but the present invention is not limited to the following Examples as long as the gist of the present invention is maintained.

<Optical laminate>

The following materials were prepared.

Glass substrate (1) (manufactured by Corning Inc., diameter: 80 mm, thickness: 0.5 mm, refractive index: 1.51, linear expansion coefficient: $31.7 \times 10^{-7}$/°C)
Thiourethane-based optical resin sheet (1) (manufactured by Mitsui Chemicals, Inc., product name SK-600, diameter: 78 mm, thickness: 0.35 mm, refractive index: 1.67, linear expansion coefficient: $6.5 \times 10^{-5}$/°C)
Adhesive resin composition (A) (acrylic-based, ultraviolet curable type)
Adhesive resin composition (B) (acrylic-based, ultraviolet curable type)
Adhesive resin composition (C) (acrylic-based, ultraviolet curable type)
Adhesive resin composition (D) (acrylic-based, ultraviolet curable type)
Adhesive resin composition (E) (epoxy-based, thermosetting type)
Adhesive resin composition (F) (epoxy-based, thermosetting type)

(Examples 1 to 4)

The glass substrate (1) was sputtered to form a transparent inorganic substance layer on the surface of the glass substrate (1). Metal Si was used as the sputtering target. In addition, Ar and $O_2$ were used as the carrier gas. In addition, the sputtering power was 5.5 kW. The method of forming the transparent inorganic substance layer is not particularly limited, and the transparent inorganic substance layer may be formed by ion-assisted vapor deposition.

Next, a silane coupling agent (manufactured by Shin-Etsu Chemical Co., Ltd., product name: KBM-5103) was applied to the transparent inorganic substance layer on the glass substrate (1) to form a silane coupling agent layer having a thickness of 7 nm.

Next, the silane coupling agent layer on the glass substrate (1) was coated with each of the adhesive resin compositions shown in Table 1 such that the thickness after curing was 50 μm.

Next, the thiourethane-based optical resin sheet (1) was laminated on the surface coated with the adhesive resin composition, and the surface was irradiated with ultraviolet light having a wavelength of 405 nm at an irradiation intensity of 600 mW/cm$^2$ for 50 seconds to cure the adhesive resin composition, thereby obtaining an optical laminate.

(Example 5)

An optical laminate was obtained in the same manner as in Example 1, except that the thickness of the adhesive layer was set to 20 μm.

(Example 6)

An optical laminate was obtained in the same manner as in Example 3, except that the thickness of the adhesive layer was set to 20 μm.

(Comparative Examples 1 and 2)

The glass substrate (1) was sputtered under the same conditions as those for forming the transparent inorganic substance layer in Example 1, and a transparent inorganic substance layer was formed on the surface of the glass substrate (1).

Next, a silane coupling agent layer was formed on the transparent inorganic substance layer on the glass substrate (1) under the same conditions as those for forming the silane coupling agent layer in Example 1.

Next, the silane coupling agent layer on the glass substrate (1) was coated with each of the adhesive resin compositions shown in Table 1 such that the thickness after curing was 50 μm.

Next, the thiourethane-based optical resin sheet (1) was laminated on the surface coated with the adhesive resin composition, and the surface was irradiated with ultraviolet light having a wavelength of 405 nm at an irradiation intensity of 600 mW/cm$^2$ for 50 seconds and heated at 80°C for 30 minutes to cure the adhesive resin composition, thereby obtaining an optical laminate.

<Viscosity of Adhesive Resin Composition>

Using a cone plate type viscometer (manufactured by Brookfield, model name: DV2T) and further using CPA-40G (angle: 0.8°, radius: 24 mm, sample amount: 0.5 mL, shear rate: 7.5 N/s) as a cone spindle, the viscosity of the adhesive resin composition was measured under a temperature condition of 25°C. The results are listed in Table 1.

<Preparation of sample for evaluation of adhesive layer>

[Examples 1 to 6]

Each of the adhesive resin compositions shown in Table 1 was applied to a PET sheet so that the thickness after curing was 0.1 mm. Next, the composition was irradiated with ultraviolet light having a wavelength of 405 nm at an irradiation intensity of 600 mW/cm$^2$ for 50 seconds to cure the adhesive resin composition. Next, the cured adhesive resin composition was peeled off from the PET sheet and cut into a width of 10 mm and a length of 20 mm to obtain a sample for evaluation of an adhesive layer.

(Comparative Examples 1 and 2)

Each of the adhesive resin compositions shown in Table 1 was applied to a PET sheet so that the thickness after curing was 0.1 mm. Next, the composition was irradiated with ultraviolet light having a wavelength of 405 nm at an irradiation intensity of 600 mW/cm$^2$ for 50 seconds, and further heated at 80°C for 30 minutes to cure the adhesive resin composition. Next, the cured adhesive resin composition was peeled off from the PET sheet and cut into a width of 10 mm and a length of 20 mm to obtain a sample for evaluation of an adhesive layer.

<Glass transition temperature of adhesive layer>

The glass transition temperature was measured under the following conditions using the sample for evaluation of an adhesive layer obtained by the above-described method. The results are listed in Table 1.

Device: DMA 7100 (manufactured by Hitachi High-Tech Science Corporation)
Temperature range: 0°C to 200°C
temperature rising rate: 5 °C/min
Measurement interval: 3 seconds
Measurement frequency: 1 Hz
Measurement mode: tension

<Loss Elastic Modulus of Adhesive Layer>

A loss elastic modulus was measured under the following conditions using the sample for evaluation of an adhesive layer, which was obtained by the above-described method. The results are listed in Table 1.

Device: DMA 7100 (manufactured by Hitachi High-Tech Science Corporation)
Sample shape: width 10 mm × thickness 0.1 mm × length 20 mm
Measurement temperature: 25°C
Measurement frequency: 1 Hz
Measurement mode: tension

<Refractive index of adhesive layer>

Using the sample for evaluation of an adhesive layer obtained by the above-described method, a refractive index at a temperature of 25°C and a wavelength of 587.6 nm was measured with an Abbe refractometer according to JIS K-0062:1992. The results are listed in Table 1.

<Curing shrinkage rate of adhesive layer>

Using the sample for evaluation of an adhesive layer obtained by the above-described method, a curing shrinkage rate was calculated according to the following equation (1) from the density $D_0$ of the adhesive layer before curing and the density $D_1$ of the adhesive layer after curing, which were measured according to JIS K-5600-2-4:2014. The results are listed in Table 1.

$$\text{Curing shrinkage rate (\%)} = (D_1 - D_0)/D_0 \quad (1)$$

<Warpage of optical laminate (23°C)>

The optical laminate obtained by the above-described method was placed at room temperature (23°C) for 1 hour, and then the warpage was measured under the following conditions.

Device: UA3P (manufactured by Panasonic Production Engineering Co., Ltd.)
Measurement region: circular region of ± 30 mm from the center of the optical laminate in each of the X and Y directions

The obtained warpage was evaluated according to the following standard. The results are listed in Table 1.

A: 100 $\mu$m or less
B: More than 100 $\mu$m and 350 $\mu$m or less
C: More than 350 $\mu$m

[Table 1]

Table 1

| | Example 1 | Example 2 | Example 3 | Example 4 | Comparative Example 1 | Comparative Example 2 |
|---|---|---|---|---|---|---|
| Adhesive resin composition | (A) Acrylic-based ultraviolet curable type | (B) Acrylic-based ultraviolet curable type | (C) Acrylic-based ultraviolet curable type | (D) Acrylic-based ultraviolet curable type | (E) epoxy-based thermosetting type | (F) epoxy-based thermosetting type |
| Viscosity of adhesive resin composition (mPa·s) | 483.4 | - | 700 | 441 | - | 4586 |
| Thickness of adhesive layer (μm) | 50 | 50 | 50 | 50 | 50 | 50 |
| Glass transition temperature of adhesive layer (°C) | 39 | 22 | 37 | 40 | 86 | 80 |
| Loss elastic modulus of adhesive layer (GPa) | 0.1 | 0.2 | 0.03 | - | 1.8 | 2.2 |
| Refractive index of adhesive layer | 1.6583 | 1.55 | 1.547 | 1.616 | 1.6094 | 1.6074 |
| Curing shrinkage rate of adhesive layer (%) | 7.8 | 3.8 | 4 | - | 5.5 | 4.5 |
| Warpage of optical laminate (23°C) (A to C) | A | A | A | A | C | C |

In the optical laminates of Examples, the warping was suppressed. From this, it can be seen that the warping can be suppressed by the optical laminate of the present embodiment.

<Warpage of optical laminate (50°C)>

The optical laminate obtained by the above-described method was placed at 50°C for 30 minutes, and then the warpage was measured under the following conditions. The results are shown in Table 2.

Device: UA3P (manufactured by Panasonic Production Engineering Co., Ltd.)

Measurement region: circular region of ± 30 mm from the center of the optical laminate in each of the X and Y directions

[Table 2]

Table 2

| | Example 1 | Example 5 | Example 3 | Example 6 |
|---|---|---|---|---|
| Adhesive resin composition | (A) Acrylic-based ultraviolet curable type | | (C) Acrylic-based ultraviolet curable type | |

(continued)

|  | Example 1 | Example 5 | Example 3 | Example 6 |
|---|---|---|---|---|
| Thickness of adhesive layer (μm) | 50 | 20 | 50 | 20 |
| Glass transition temperature of adhesive layer (°C) | 39 | | 37 | |
| Loss elastic modulus of adhesive layer (GPa) | 0.1 | | 0.03 | |
| Warpage of optical laminate (50°C) (μm) | 340 | 350 | 270 | 340 |

In a case where the thickness of the adhesive layer was increased, the warpage was reduced. From this, it can be seen that the warping can be further suppressed in a case where the thickness of the adhesive layer is increased.

This application claims priority based on Japanese Patent Application No. 2023-118126, filed on July 20, 2023, the entire disclosure of which is incorporated herein by reference.

REFERENCE SIGNS LIST

1        optical substrate
2        (thio)urethane-based optical resin layer α
3        (thio)urethane-based optical resin layer β
10      optical laminate
11      light irradiation unit
12      light
13      eyes
20      optical information transmission device

**Claims**

1.  An optical laminate comprising:

    an optical substrate;
    a (thio)urethane-based optical resin layer on at least one surface of the optical substrate; and
    an adhesive layer between the optical substrate and the (thio)urethane-based optical resin layer,
    wherein a glass transition temperature of the adhesive layer is 70°C or lower.

2.  The optical laminate according to Claim 1,
    wherein a loss elastic modulus of the adhesive layer, which is measured under conditions of a temperature of 25°C and a measurement frequency of 1 Hz in a tensile mode, is 0.001 GPa or more and 1.5 GPa or less.

3.  The optical laminate according to Claim 1 or 2,
    wherein a thickness of the adhesive layer is 0.5 μm or more and 1000 μm or less.

4.  The optical laminate according to any one of Claims 1 to 3,
    wherein a curing shrinkage rate obtained by Expression (1) from a density $D_0$ of the adhesive layer before curing and a density $D_1$ of the adhesive layer after curing, which are measured according to JIS K-5600-2-4:2014, is 10% or less,

$$\text{Curing shrinkage rate (\%)} = (D_1 - D_0)/D_0 \quad (1).$$

5.  The optical laminate according to any one of Claims 1 to 4,
    wherein a refractive index of the adhesive layer at a temperature of 25°C and a wavelength of 587.6 nm according to JIS K-0062:1992 is 1.47 or more.

6.  The optical laminate according to any one of Claims 1 to 5,
    wherein the adhesive layer includes one or two or more selected from the group consisting of a (meth)acrylic-based resin and an epoxy-based resin.

7. The optical laminate according to any one of Claims 1 to 6,
   wherein the adhesive layer is formed of a cured product of an adhesive resin composition, and the adhesive resin composition is a photocurable resin composition or a thermosetting resin composition.

8. The optical laminate according to any one of Claims 1 to 7,
   wherein a thickness of the (thio)urethane-based optical resin layer is 2.0 mm or less.

9. The optical laminate according to any one of Claims 1 to 8,
   wherein a refractive index of the (thio)urethane-based optical resin layer at a temperature of 25°C and a wavelength of 587.6 nm according to JIS K-0062:1992 is 1.47 or more.

10. The optical laminate according to any one of Claims 1 to 9,
    wherein the optical substrate includes one or two or more selected from the group consisting of a glass substrate and an optical crystal substrate.

11. The optical laminate according to any one of Claims 1 to 10,
    wherein a refractive index of the optical substrate at a temperature of 25°C and a wavelength of 587.6 nm according to JIS K-0062:1992 is 1.47 or more.

12. The optical laminate according to any one of Claims 1 to 11, further comprising:
    a transparent inorganic substance layer between the optical substrate and the adhesive layer.

13. The optical laminate according to any one of Claims 1 to 12, further comprising:
    a coupling agent layer between the optical substrate and the adhesive layer.

14. The optical laminate according to any one of Claims 1 to 13,
    wherein a warpage $F_A$ of a surface A on the (thio)urethane-based optical resin layer side in the optical laminate is 350 um or less.

15. The optical laminate according to any one of Claims 1 to 14,
    wherein the (thio)urethane-based optical resin layer is not peeled off from the optical substrate when the optical laminate is placed in an environment of a temperature of 60°C and a humidity of 90% for 360 hours.

16. The optical laminate according to any one of Claims 1 to 15,
    wherein a refractive index of the optical laminate at a temperature of 25°C and a wavelength of 587.6 nm according to JIS K-0062:1992 is 1.47 or more.

17. The optical laminate according to any one of Claims 1 to 16,
    wherein the optical laminate is usable for a wearable device.

18. A method for manufacturing an optical laminate, comprising:

    a step (A) of preparing a laminate including an optical substrate, a (thio)urethane-based optical resin layer on at least one surface of the optical substrate, and an uncured or semi-cured adhesive layer between the optical substrate and the (thio)urethane-based optical resin layer; and
    a step (B) of curing the uncured or semi-cured adhesive layer to obtain an optical laminate.

19. The method for manufacturing an optical laminate according to Claim 18, further comprising:
    a step (C) of placing the laminate in a reduced pressure environment before the step (B).

20. An optical information transmission device comprising:

    a light irradiation unit; and
    the optical laminate according to any one of Claims 1 to 17.

[Fig.1]

[Fig.2]

## INTERNATIONAL SEARCH REPORT

| International application No. |
| --- |
| **PCT/JP2024/025512** |

**A.  CLASSIFICATION OF SUBJECT MATTER**

*G02B 1/00*(2006.01)i; *B32B 17/10*(2006.01)i; *G02B 1/04*(2006.01)i; *G02B 27/02*(2006.01)i
FI:   G02B1/00; B32B17/10; G02B1/04; G02B27/02 Z

According to International Patent Classification (IPC) or to both national classification and IPC

**B.  FIELDS SEARCHED**

Minimum documentation searched (classification system followed by classification symbols)

B32B17/10; G02B1/00-G02B1/08; G02B27/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| X | JP 2017-24386 A (MITSUBISHI PLASTICS, INC.) 02 February 2017 (2017-02-02) paragraphs [0013]-[0107], fig. 1-3 | 1-11, 13-20 |
| Y | | 4, 12, 17, 20 |
| Y | JP 2014-213488 A (SUMITOMO CHEMICAL COMPANY, LIMITED) 17 November 2014 (2014-11-17) paragraphs [0060]-[0061] | 4 |
| Y | JP 2003-277697 A (BRIDGESTONE CORPORATION) 02 October 2003 (2003-10-02) paragraph [0011] | 4 |
| Y | JP 7-110403 A (OLYMPUS OPTICAL CO., LTD.) 25 April 1995 (1995-04-25) paragraphs [0006]-[0038] | 12 |
| Y | JP 63-89343 A (MINOLTA CAMERA CO., LTD.) 20 April 1988 (1988-04-20) page 2, upper right column, line 17 to page 5, lower right column, line 2 | 12 |

☑ Further documents are listed in the continuation of Box C.    ☑ See patent family annex.

| | |
| --- | --- |
| *  Special categories of cited documents: <br> "A"  document defining the general state of the art which is not considered to be of particular relevance <br> "D"  document cited by the applicant in the international application <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
| --- | --- |
| **25 September 2024** | **08 October 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**

| International application No. |
|---|
| **PCT/JP2024/025512** |

| C. | DOCUMENTS CONSIDERED TO BE RELEVANT | |
|---|---|---|
| Category* | Citation of document, with indication, where appropriate, of the relevant passages | Relevant to claim No. |
| Y | WO 2020/170801 A1 (MITSUI CHEMICALS, INC.) 27 August 2020 (2020-08-27) paragraphs [0046], [0063]-[0065], fig. 2 | 17,20 |

Form PCT/ISA/210 (second sheet) (July 2022)

## INTERNATIONAL SEARCH REPORT
### Information on patent family members

International application No.

**PCT/JP2024/025512**

| Patent document cited in search report | | | Publication date (day/month/year) | Patent family member(s) | | | Publication date (day/month/year) |
|---|---|---|---|---|---|---|---|
| JP | 2017-24386 | A | 02 February 2017 | JP | 6613870 | B2 | |
| JP | 2014-213488 | A | 17 November 2014 | WO | 2014/175463 | A1 | |
| | | | | CN | 105143936 | A | |
| | | | | CN | 105143936 | B | |
| | | | | KR | 10-2016-0002889 | A | |
| | | | | KR | 10-2241901 | B1 | |
| | | | | JP | 6048297 | B2 | |
| JP | 2003-277697 | A | 02 October 2003 | US | 2005/0158500 | A1 | |
| | | | | paragraph [0030] | | | |
| | | | | EP | 1484377 | A1 | |
| | | | | EP | 1484377 | B1 | |
| | | | | JP | 6048297 | B2 | |
| JP | 7-110403 | A | 25 April 1995 | (Family: none) | | | |
| JP | 63-89343 | A | 20 April 1988 | JP | 2510532 | B2 | |
| WO | 2020/170801 | A1 | 27 August 2020 | US | 2022/0120935 | A1 | |
| | | | | paragraphs [0066], [0089]-[0094], fig. 2 | | | |
| | | | | US | 11988007 | B2 | |
| | | | | EP | 3910386 | A1 | |
| | | | | CN | 113330336 | A | |
| | | | | CN | 113330336 | B | |
| | | | | JP | 7292689 | B2 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020170801 A

- JP 2023118126 A